Europäisches Patentamt

European Patent Office

Office européen des brevets

(11) Veröffentlichungsnummer : **0 149 463**
**B1**

## (12) EUROPÄISCHE PATENTSCHRIFT

(45) Veröffentlichungstag der Patentschrift :
**17.08.88**

(21) Anmeldenummer : **85100156.0**

(22) Anmeldetag : **09.01.85**

(51) Int. Cl.⁴ : **B 01 D 46/36**, B 01 D 53/06

(54) Verfahren zum Entfernen von Fremdstoffen aus einem Abwärmestrom.

(30) Priorität : **13.01.84 CH 168/84**

(43) Veröffentlichungstag der Anmeldung :
**24.07.85 Patentblatt 85/30**

(45) Bekanntmachung des Hinweises auf die Patenterteilung : **17.08.88 Patentblatt 88/33**

(84) Benannte Vertragsstaaten :
**AT BE DE FR GB IT NL SE**

(56) Entgegenhaltungen :
**CH-A-    88 102**

(73) Patentinhaber : **W. Kunz AG Maschinen- und Apparatebau**
**CH-5606 Dintikon (CH)**

(72) Erfinder : **Kunz, Werner**
**Neuhofstrasse 32**
**CH-5600 Lenzburg (CH)**
Erfinder : **Vonplon, Armin**
**Krummacker 12**
**CH-8964 Rudolfstetten (CH)**

(74) Vertreter : **EGLI-EUROPEAN PATENT ATTORNEYS**
**Horneggstrasse 4**
**CH-8008 Zürich (CH)**

EP 0 149 463 B1

## Beschreibung

Aus wärmetechnischen Betriebsanlagen fällt häufig ein Luft- und/oder Abgasstrom aus mit Temperaturen von etwa 80 - 200 °C an, welcher häufig Wasserdampf und staubförmige Verunreinigungen enthält. Einerseits ergibt die Reinigung von z. B. Kesselabgasen oder Trocknungsbrüden mit Multizyklonen oft nur eine ungenügende Entstaubung, herkömmliche Filter andererseits neigen zu Verklebungen und ergeben keine Wärmerückgewinnung.

Eine Verbesserung kann beispielsweise durch den Einbau von Nasswäschern erreicht werden. Eine andere Möglichkeit besteht im Einbau eines Wärmeaustauschers, in welchem die Abgase unter den Taupunkt abgekühlt werden, womit die Fremdstoffe weitgehend im Kondensat zurückgehalten werden. Hierbei müssen jedoch besondere Massnahmen zur Vermeidung von Ablagerungen der Fremdstoffe im Wärmeaustauscher vorgesehen werden. Derartige Anlagen verlangen aber einen bedeutenden apparativen Aufwand.

Bekannt ist ein Planfilter für gasförmige Medien nach CH-A-88 102 mit einem beweglichen Band als Träger für eine körnige Filtermasse. Die gasförmigen Medien werden von oben auf die Filtermasse geleitet und auf der Unterseite abgeführt, wobei nur eine Filtrierung der gasförmigen Medien erfolgt.

Hier setzt die Erfindung ein, der die Aufgabe zugrundeliegt, ein Verfahren zur Entfernung von Fremdstoffen aus gasförmigen Medien so weiter auszugestalten, dass ausser der Filtrierung auch gleichzeitig ein Nutzen durch Wärmerückgewinnung aus den gasförmigen Medien gezogen und eine Trocknung der Filtermasse erreicht wird.

Diese Aufgabe wird gemäss der Erfindung durch ein Verfahren zur Entfernung von Fremdstoffen aus einem warmen Luft- und/oder Abgasstrom gelöst, der durch ein als Filter dienendes, auf einer luft- und gasdurchlässigen Unterlage gleichmässig ausgebreitetes, pflanzliches Gut geleitet wird, wobei das pflanzliche Gut getrocknet und anschliessend aus dem Bereich des Luft- und/oder Abgasstroms entfernt wird.

Auf diese Weise kann mit einem Abwärme abführenden Luft- und/oder Abgasstrom das pflanzliche Gut ganz oder teilweise getrocknet werden.

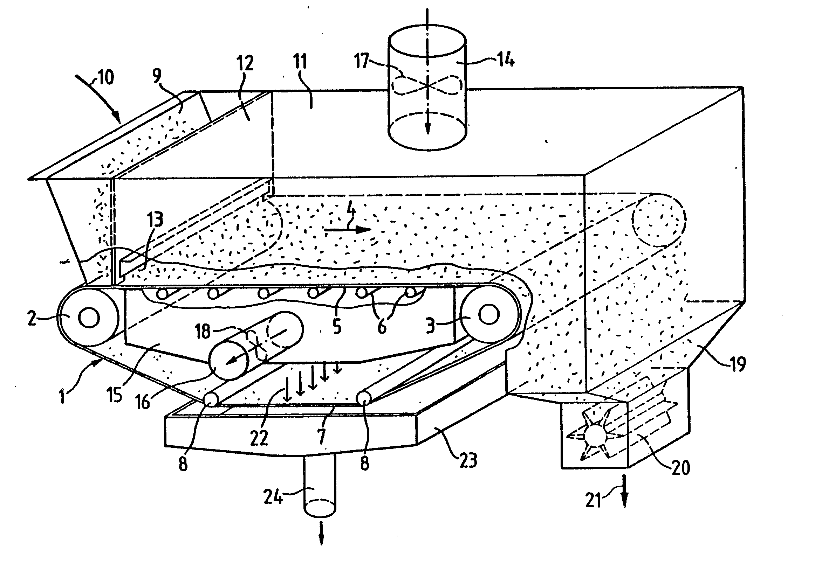

Die Erfindung ist in der Zeichnung in einem Ausführungsbeispiel dargestellt und nachfolgend beschrieben. Die einzige Figur der Zeichnung zeigt eine Filteranlage in schematischer, räumlicher Darstellung.

Die Erfindung geht von der Ueberlegung aus, dass für das Ausscheiden von Feststoffen aus einem Abgasstrom niederer Temperatur, z. B. von 80 - 200 °C, eine Schicht aus einem teilchenförmigen Gut verwendet werden kann, wobei gleichzeitig das Gut einer Aufwärmung und Trocknung unterliegt. In der, in der Figur dargestellten Filteranlage wird ein endloses Band 1 über zwei Walzen 2, 3 geführt, wobei eine der Walzen durch einen Antrieb (nicht dargestellt) angetrieben wird und das Band in Pfeilrichtung 4 bewegt. Das obere Trum 5 des Bandes 1 ist auf Stützwalzen 6 abgestützt, während das untere Trum 7 durch Führungswalzen 8 geführt ist. Das endlose Band 1 ist durchlässig, so dass ein Gasstrom durch dasselbe durchgeleitet werden kann.

Ueber der Walze 2 ist eine trichterförmige Eingabestelle 9 angeordnet, durch die ein durch einen Pfeil 10 bezeichnetes teilchenförmiges Gut auf das obere Trum 5 des Bandes 1 eingegeben wird. Das obere Trum 5 ist durch ein Zuleitungsgehäuse 11 abgedeckt, dessen eintrittseitige Wand 12 einen Spalt 13 über dem oberen Trum 5 aufweist, durch den das teilchenförmige Gut in einer Schicht gleichmässig über das Band 1 verteilt und in Pfeilrichtung 4 bewegt wird. Das Zuleitungsgehäuse 11 weist eine Zuleitung 14 auf, durch die ein Luft- und/oder Abgasstrom geringer Wärme, z. B. von 80 - 200 °C, in das Zuleitungsgehäuse 11 eingeführt wird. Auf der Unterseite des oberen Trums 5 ist ein Absauggehäuse 15 angeordnet, das im wesentlichen die Bandfläche zwischen den Walzen 2, 3 abdeckt. An das Absauggehäuse 15 ist eine Absaugleitung 16 angeschlossen, durch die der Luft- und/oder Abgasstrom abgeleitet wird. In der Zuleitung 14 und in der Absaugleitung 16 ist je ein Gebläse 17, 18 schematisch dargestellt, dessen mit einem Pfeil versehene Drehachse die Richtung des durch das Band 1 fliessenden Stroms angibt. Die Gebläse 17, 18 müssen jedoch keineswegs an den angegebenen Stellen angeordnet sein, sondern können auch in grösserer Entfernung vom Zuleitungs- bzw. Absaugsgehäuse 11, 15 angeordnet sein.

Die auf dem obern Trum 5 des durchlässigen Bandes 1 liegende Schicht wird von dem Luft- und/oder Abgasstrom durchströmt und wirkt als Filterschicht, die die in dem Strom enthaltenden Feststoffe o. dgl. aus dem Strom abscheidet. Gleichzeitig wird ein Teil der im Strom mitgeführten Wärme zur Aufwärmung des teilchenförmigen Gutes ausgenützt, wodurch dieses in ihm enthaltene Feuchtigkeit abgibt und dadurch trocknet. Solange das Gut eine hohe Feuchtigkeit aufweist, wird der Abgasstrom bis ganz oder sehr nahe auf die Taupunkttemperatur der Abgase abgekühlt und dabei scheidet sich teilweise im Abgas enthaltenes Schwefeldyoxid im teilchenförmigen Gut. Diese Ausscheidungswirkung kann durch schwefelabsorbierende Zusatzstoffe, z. B. gebrannten Kalk, weiter gefördert werden und dadurch ein wesentlicher Beitrag zur Verminderung der Umweltbelastung geleistet werden.

Das aufgewärmte und bei genügend langer Aufenthaltszeit des Luft- und/oder Abgasstroms getrocknete Gut fällt über die Walze 3 in ein Auffanggehäuse 19 und wird dort durch eine Austragschnecke oder durch ein rotierendes Schleusenrad 20 in Richtung des Pfeiles 21 ausgetragen.

Das untere, von der Schicht befreite untere Trum 7 wird auf seinem Weg zur Walze 2 durch Wasser gereinigt, das als Pfeile 22 dargestellt ist und mit dem die Innenseite des Bandes 1 beaufschlagt wird. Das durch das untere Trum 7 fliessende Wasser wird in einer Wanne 23 aufgefangen und durch eine Leitung 24 abgeleitet.

Die Absaugleitung 16 kann auch auf der Aussenseite des unteren Trums 7 angeordnet sein, womit der aus dem Gut austretende Abgasstrom durch das untere Trum 7 hindurch abgesaugt wird. Dadurch kann gegebenenfalls auf die Reinigung des Bandes 1 durch Wasser verzichtet werden.

Durch die beschriebene Filteranlage werden folgende Vorteile erreicht :

— Die im Luft- und/oder Abgasstrom enthaltenen Feststoffmengen werden zum überwiegenden Teil durch die Schicht des teilchenförmigen Gutes zurückgehalten,

— Die Temperatur des Stromes von etwa 80 - 200 °C wird bis nahe an seinen Taupunkt abgekühlt, womit mindestens eine Aufwärmung oder Vortrocknung des Gutes und eine entsprechende Abwärmeausnützung erreicht wird,

— Durch den Kontakt des Luft- oder Gasstromes mit dem teilchenförmigen Gut wird wegen des tiefen Temperaturniveaus eine recht hohe Schwefelausscheidung in der Schicht erreicht, womit in wenig aufwendiger Weise eine Entschwefelung des Luft- und/oder Abgasstroms erreicht wird.

Das Verfahren sei an einem praktischen Beispiel beschrieben :

Es werden alle oder ein Teil der in einer Zuckerfabrik anfallenden Zuckerrübenschnitzel als gleichmässige Schicht auf das durchlässige Band 1 gebracht und diese mit einem Strom staubbeladener Trocknerabluft von ca. 90 - 130 °C von oben beaufschlagt. Aus dem Absaugehäuse 15 unter dem durchlässigen Band 1 wurde die gereinigte Abluft mit dem Ventilator 18 abgesaugt. Die Ventilatorleistung wurde hierbei so eingestellt, dass über der Schnitzelschicht nur ein ganz geringer Unterdruck herrschte, um Rauchgasverluste sowie Falschlufteintritt zu verhindern. Zur Ermittlung des Druckverlustes in der Schnitzelschicht wurden verschiedene Anströmgeschwindigkeiten und Schnitzelschichtdicken eingestellt. Günstige Verhältnisse wurden bei einer Schichtdicke von ca. 5 cm und einer Luftanströmgeschwindigkeit von ca. 1 m/s erhalten. Der Staubgehalt der zugeführten Abluft betrug ca. 250 mg/m³, während die gefilterte Luft noch einen Staubgehalt von ca. 50 mg/m³ aufwies. Bei frischen Pressschnitzeln wurde die Trocknerabluft auf den Taupunkt von ca. 70 °C abgekühlt ; mit steigender Trocknung der Schnitzel stieg die Temperatur langsam an. Bei kontinuierlichem Betrieb des Bandes 1 auf eine Restfeuchtigkeit der Schnitzel von ca. 10 % ergab sich eine mittlere Luftaustrittstemperatur von 75 - 80 °C.

Die grössten Staubmengen lagerten sich direkt auf der Oberfläche der Schicht ab, wobei visuell eine Eindringtiefe des Staubes von etwa 2 cm festgestellt werden konnte. Der sehr feine Staub an der Schichtoberfläche kann beispielsweise mit dem Produkt weiterverarbeitet werden. Es wäre aber auch möglich, denselben abzusaugen. Auf diese Weise könnte ein beträchtlicher Teil des auf der Schicht lagernden Staubes entfernt und gegebenenfalls verbrannt werden.

In der beschriebenen Anlage können verschiedene Arten von teilchenförmigem Gut in derselben Weise wie die im Beispiel erwähnten Zuckerrübenschnitzel als « Filterschicht » eingesetzt werden. So können Gras, Mais o. dgl. Produkte durch einen Luft- und/oder Abgasstrom aufgewärmt und mindestens vorgetrocknet werden, wobei gleichzeitig die im Strom befindlichen Fremdstoffe zu einem grossen Teil ausgeschieden werden können. Bei allen solchen Produkten kann der sich vor allem an der Oberfläche der Schicht lagernde Staub abgesaugt werden, falls dies für erforderlich erachtet wird. Der Staub kann hierbei durch ein durchlässiges Vlies hindurch abgesaugt werden, um die Mitnahme von Produktteilen zu vermeiden.

## Patentansprüche

1. Verfahren zur Entfernung von Fremdstoffen aus einem warmen Luft- und/oder Abgasstrom, der durch ein als Filter dienendes, auf einer luft- und gasdurchlässigen Unterlage gleichmässig ausgebreitetes, pflanzliches Gut geleitet wird, wobei das pflanzliche Gut getrocknet und anschliessend aus dem Bereich des Luft- oder Abgasstroms entfernt wird.

2. Verfahren nach Anspruch 1, dadurch gekennzeichnet, dass das pflanzliche Gut kontinuierlich durch den Bereich des Luft- und/oder Abgasstroms geführt wird.

3. Verfahren nach Anspruch 1, dadurch gekennzeichnet, dass der Druck unmittelbar über der Oberfläche des pflanzlichen Gutes gleich dem Atmosphärendruck oder geringfügig darunter eingestellt wird.

4. Verfahren nach einem der Ansprüche 1 bis 3, dadurch gekennzeichnet, dass der auf dem pflanzlichen Gut abgelagerte Staub nach dem Entfernen desselben aus dem Bereich des Luft- und/oder Abgasstroms von der Oberfläche her abgesaugt wird.

5. Verfahren nach einem der Ansprüche 1-4, dadurch gekennzeichnet, dass als pflanzliches Gut Zuckerrübenschnitzel eingesetzt werden.

## Claims

1. Process for the removal of foreign matter from a warm air and/or waste gas stream which is fed through a vegetable material evenly spread out on an air and gas permeable substrate which serves as a filter, wherein the vegetable material is dried and then removed from the region of the air or waste gas stream.

2. Process according to claim 1 characterised in that the vegetable material is continuously led through the region of the air and/or waste gas stream.

3. Process according to claim 1 characterised in that the pressure directly over the surface of the vegetable material is adjusted to be equal to atmospheric pressure or slightly thereunder.

4. Process according to one of claims 1 to 3 characterised in that the dust deposited on the vegetable material after the removal of the same from the region of the air and/or waste gas stream is sucked off from the surface.

5. Process according to one of claims 1-4 characterised in that sugarbeet cuttings are used as the vegetable material.

## Revendications

1. Procédé d'élimination de matières étrangères contenues dans un courant chaud d'air et/ou de gaz d'évacuation qui traverse une matière végétale servant de filtre, uniformément étendue sur un support perméable à l'air et au gaz, la matière végétale étant séchée puis éloignée de la zone du courant d'air ou de gaz d'évacuation.

2. Procédé selon la revendication 1, caractérisé en ce que la matière végétale est acheminée en continu à travers la zone du courant d'air et/ou de gaz d'évacuation.

3. Procédé selon la revendication 1, caractérisé en ce que la pression est directement réglée au-dessus de la surface de la matière végétale sur une valeur égale à la pression atmosphérique ou légèrement inférieure.

4. Procédé selon l'une des revendications 1 à 3, caractérisé en ce que la poussière déposée sur la matière végétale est aspirée en surface, après éloignement de cette matière de la zone du courant d'air et/ou de gaz d'évacuation.

5. Procédé selon l'une des revendications 1 à 4, caractérisé en ce que l'on utilise comme matière végétale des cossettes de betteraves à sucre.

0 149 463